# FASCICULE DE BREVET EUROPEEN

(11) **EP 1 137 035 B1**
(45) Date de publication et mention de la délivrance du brevet: **28.01.2009**
(21) Numéro de dépôt: 01410017.6
(22) Date de dépôt: 12.02.2001
(51) Int. Cl.: H01H 71/08, H02B 1/20, H01R 9/26

(54) **Dispositif d'assemblage et de raccordement électrique d'une pluralité d'appareils électriques modulaires**
Einrichtung zum elektrischen Anschliessen von mehreren modularen elektrischen Vorrichtungen
Electrical connecting system for multiple modular electrical devices

(30) Priorité: 20.03.2000 FR 0003511
(43) Date de publication de la demande: 26.09.2001
(73) Titulaire: SCHNEIDER ELECTRIC INDUSTRIES SAS, 92500 Rueil-Malmaison (FR)
(72) Inventeur: Pellicano, Joseph, 38050 Grenoble cedex 09 (FR); Valcarce, Antonio, 38050 Grenoble cedex 09 (FR)
(74) Mandataire: Ritzenthaler, Jacques

(56) Documents cités:
- EP-A- 0 114 539
- DE-A- 3 802 359
- DE-U- 1 957 365
- FR-A- 2 730 855
- FR-A- 2 787 238

## Description

La présente invention concerne un dispositif d'assemblage et de raccordement électrique d'une pluralité d'appareils électriques modulaires montés côte à côte sur un rail de montage, comprenant au moins un peigne de raccordement, chaque peigne comportant une barre conductrice logée dans un support isolant et destinée à véhiculer une phase ou le neutre, ladite barre comportant des dents réparties à intervalles réguliers le long de ladite barre et s'étendant perpendiculairement à la direction longitudinale de ladite barre, lesdites dents étant destinées à être introduites respectivement dans les bornes correspondantes des appareils situées sur la face de raccordement desdits appareils.

Le document EP 0 114 539 décrit un dispositif selon le préambule de la revendication 1.

On connaît un dispositif de raccordement du genre précédemment mentionné, comprenant deux peignes dits droits, constitué chacun par une barre logée dans un support isolant et comportant des dents s'étendant dans un plan perpendiculaire au plan de la barre et donc du support isolant, ledit plan de la barre s'étendant parallèlement à la surface de raccordement en position montée du peigne.
Or, dans un tel dispositif, lorsque deux peignes sont superposés pour véhiculer une phase et le neutre, il n'est pas possible d'accéder aux bornes des appareils situées au niveau des dents du peigne inférieur. Ainsi, lorsque l'opérateur souhaite raccorder un câble à ces bornes, il est nécessaire de détruire la partie isolante du peigne. En outre, pour un tel peigne, la barre et le support isolant sont différents pour les deux peignes. Un autre inconvénient de ce dispositif tient en ce que la visibilité des bornes n'est pas suffisante lors de l'opération de raccordement.

La présente invention résout ces problèmes et propose un dispositif d'assemblage et de raccordement électrique de conception simple facilitant considérablement l'accès à toutes les bornes par des câbles.

A cet effet, la présente invention a pour objet un dispositif d'assemblage et de raccordement électrique d'une pluralité d'appareils électriques modulaires montés côte à côte sur un rail de montage, du genre précédemment mentionné, ce dispositif étant caractérisé en ce que le plan de la barre est incliné par rapport au plan contenant les dents de telle manière que le plan de la barre forme avec la surface de raccordement précitée un angle compris entre 35° et 55°.

Selon une réalisation particulière, l'angle précité est de l'ordre de 45°.

Selon une caractéristique particulière, le support isolant du ou de chaque peigne comporte des évidements situés entre les dents et destinés à permettre le raccordement d'un câble aux bornes situées en regard des dents d'un peigne dit inférieur.

Selon une autre caractéristique, ce dispositif comporte en outre des moyens d'indexage des deux peignes l'un par rapport à l'autre, lesdits moyens étant prévus en partie sur l'un des peignes et en partie sur l'autre peigne.

Avantageusement, ces moyens comprennent des bossages prévus sur le support isolant de l'un des peignes coopérant avec des encoches prévues sur le support isolant de l'autre des peignes.

Mais d'autres avantages et caractéristiques de l'invention apparaîtront mieux dans la description détaillée qui suit et se réfère aux dessins annexés donnés uniquement à titre d'exemple et dans lesquels :
- La fig.1 est une vue en coupe transversale d'un peigne selon l'invention,
- la fig.2 est une vue en perspective du même peigne, vu de dessus,
- la fig.3 est une vue en perspective du même peigne vu de dessous,

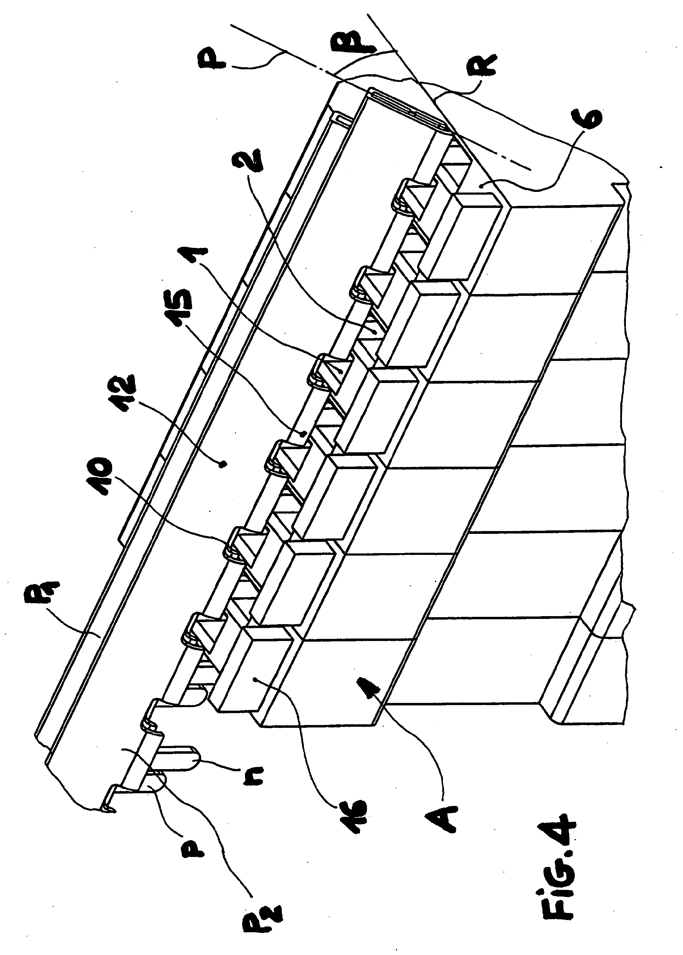

- la fig.4 est une vue en perspective illustrant un ensemble de disjoncteurs raccordés électriquement par un dispositif de raccordement selon l'invention,
- la fig.5 est une vue similaire à la figure précédente, mais illustrant en outre le raccordement de deux bornes de phase et de neutre à deux câbles de grosse section, et
- la fig.6 est une vue similaire aux précédente, mais vu de l'avant des appareils.

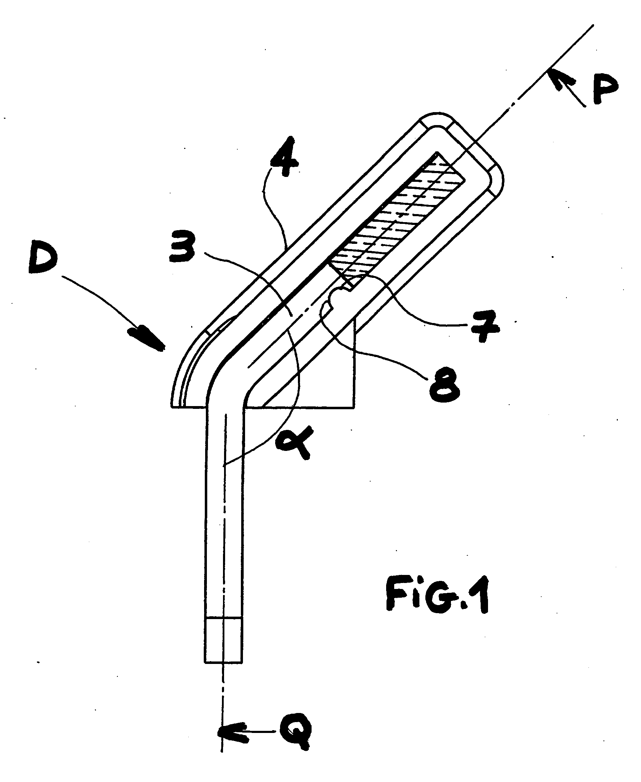

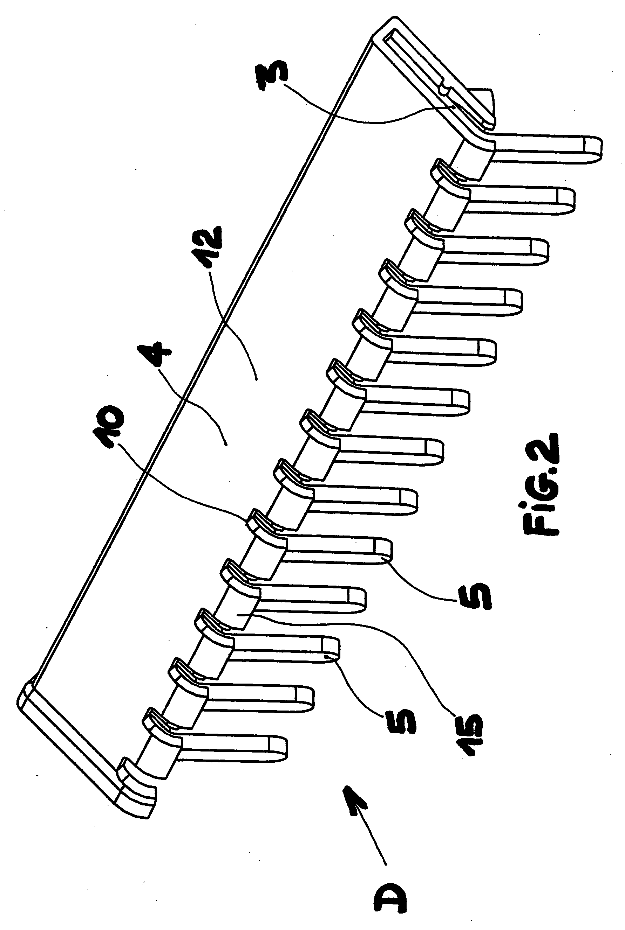

Sur les figures, on voit un dispositif D de raccordement électrique selon l'invention destiné à être utilisé pour alimenter un ensemble de disjoncteurs unipolaires et neutre A disposés côte à côte sur un rail de montage (non représenté).
Les appareils concernés étant du type unipolaire et neutre, c'est à dire comportant chacun une borne de phase 1 et une borne de neutre 2, le dispositif est constitué de deux peignes p1,p2 destinés à véhiculer respectivement la phase et le neutre, lesdits peignes étant superposés lors du raccordement aux appareils A. Chaque peigne p1,p2 comporte une barre conductrice 3 fixée à l'intérieur d'un support isolant 4 réalisé de préférence en polyamide, ladite barre 3 comportant un certain nombre de dents 5 venues de matière avec ladite barre 3 et s'étendant à partir de ladite barre 3 perpendiculairement à sa direction longitudinale. Ces dents 5 sont réparties à intervalles réguliers le long de ladite barre 3, la distance entre deux dents 5 successives correspondant au pas des appareils A, étant de 18mm.
Conformément à l'invention, le plan P contenant la barre conductrice 3 est incliné par rapport au plan Q contenant les dents 5 d'un angle α, α étant tel que l'angle β formé entre le plan P de la barre 3 et le plan R de la surface de raccordement 6 des appareils A soit compris entre 35° et 55° lorsque les dents 5 du peigne p1,p2 sont introduites dans les bornes 1,2. Avantageusement, cet angle β est de 45° alors que l'angle α formé entre le plan P de la barre 3 et le plan Q des dents 5 est d'environ 135°.
Comme on le voit en particulier sur la figure 1, les barres conductrices 3 sont fixées à l'intérieur des supports isolants 4 par l'intermédiaire d'éléments en saillie 7 prévus dans le support isolant 4 destinés à coopérer avec des évidements 8 de forme correspondante prévus dans la barre 3. Ces éléments 7,8 sont agencés de manière que les barres 3 soient indexées au pas de 18mm, ce qui facilite leur mise en place.
Le support isolant 4 est formé d'une pièce de forme allongée de section transversale en forme de U épousant complètement la forme de la barre 3 de manière à s'étendre dans le même plan P que la barre 3.
Comme on le voit en particulier sur la figure 2, le support isolant 4 comporte, entre deux dents successives 5, deux évidements en regard 9,10 prévus respectivement sur la face inférieure 11 et sur la face supérieure 12 du support isolant 4 et destinés à permettre le passage d'un câble comme ceci sera expliqué ultérieurement.

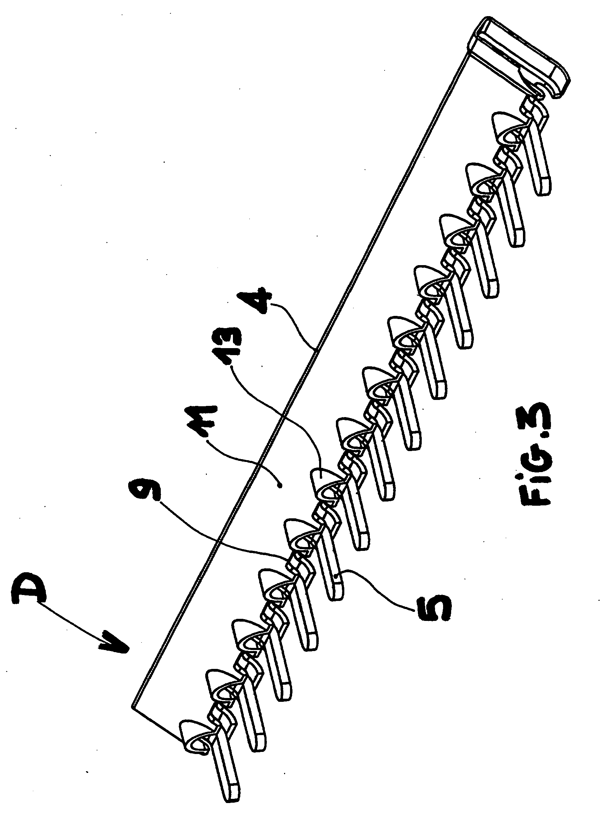

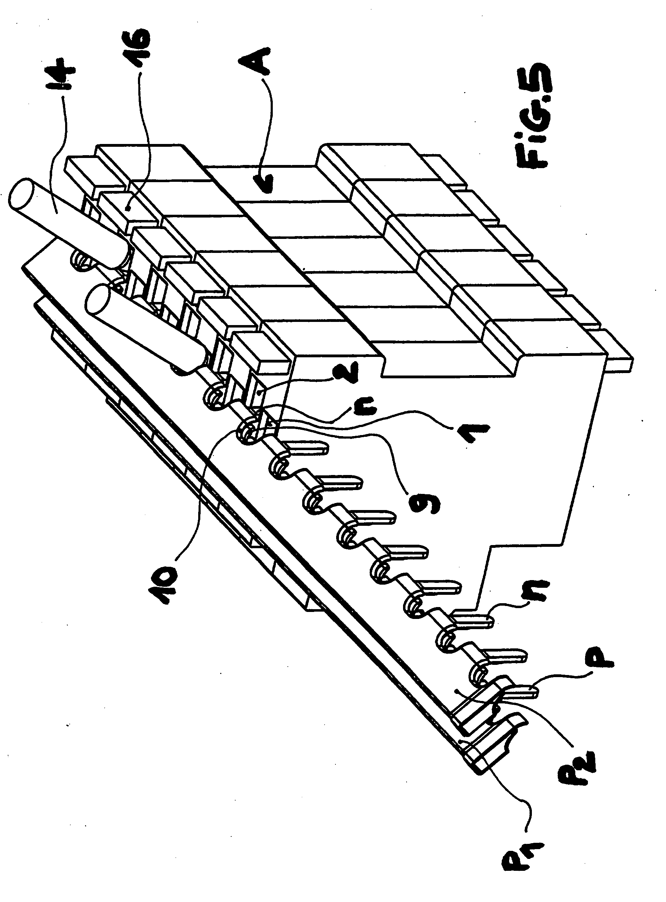

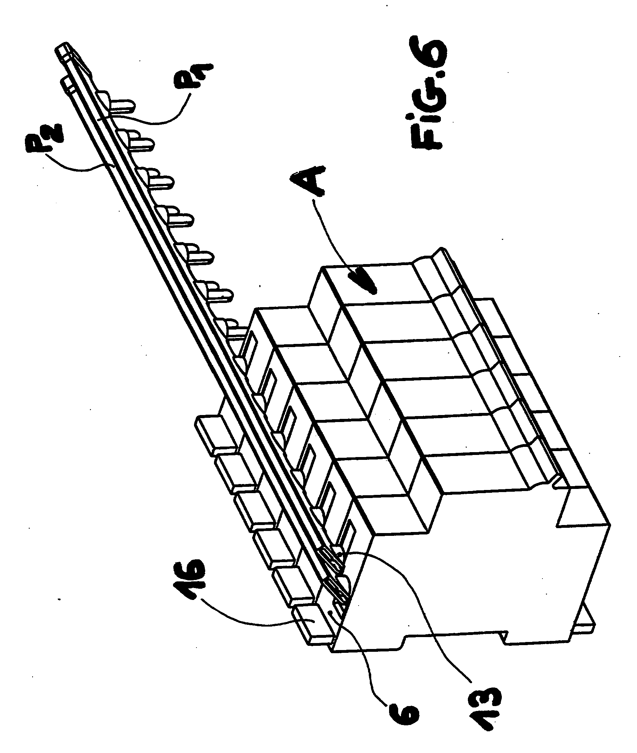

Comme on le voit sur la figure 3, le support isolant 4 comporte en outre sur sa face inférieure 11 des bossages 13 disposés au niveau de chacune des dents 5, lesdits bossages 13 étant destinés à coopérer respectivement avec les encoches (évidements) précitées 10 disposés sur la face supérieure 12 du support isolant 4 d'un autre peigne p1 situé au dessous du premier p2 de manière à réaliser l'indexage des deux peignes p1,p2 l'un par rapport à l'autre.
Ainsi, pour réaliser cet indexage, chaque peigne p1,p2 comporte des encoches 10 prévues sur la face supérieure 12 du support isolant 4 et des bossages 13 prévus sur la face inférieure 11 du support isolant 4. Ces bossages 13 sont situés respectivement sous les dents 5 du peigne p1,p2 tandis que les encoches 13 sont situées entre les dents 5 du peigne.
Comme on le voit en particulier sur la figure 2, le support isolant 4 se prolonge (prolongement de matière 15) au niveau de chaque dent 5 sur une certaine longueur de manière à coiffer la partie supérieure de ladite dent 5.
L'opération de raccordement des appareils A au moyen du dispositif selon l'invention va être décrit dans ce qui suit en référence aux figures.
Les appareils A étant du type unipolaire et neutre, deux peignes p1,p2 sont nécessaires pour effectuer le raccordement. Ces deux peignes p1,p2 sont placés l'un au dessus de l'autre, les bossages 13 du peigne dit supérieur p2 étant introduits dans les encoches 10 du peigne dit inférieur p1. Ainsi, les deux peignes p1,p2 sont indexés l'un par rapport à l'autre, et les dents de neutre n du peigne dit supérieur p2 peuvent être introduites dans les bornes de neutre 2 des appareils A, tandis que les dents de phase p du peigne dit inférieur p1 peuvent être introduites dans les bornes de phase 1 des appareils A. Grâce à cet indexage, les dents 5 sont dans l'axe des bornes 1,2 lors du raccordement. Dans cette position raccordée des peignes p1,p2, il est possible pour l'opérateur de raccorder un câble 14 aux bornes de phase 1 et de neutre 2 des appareils A. Comme on le voit sur la figure 5, les bornes de neutre 2 sont directement accessibles car situées à l'arrière des peignes p1,p2, tandis que les bornes de phase 1 sont accessibles à travers les évidements 9,10 prévus dans le support isolant 4. Ce dispositif permet donc l'accès d'un câble 14 de section importante dans les bornes des appareils quelque soit la distance entre les bornes. En position raccordée, on voit que les prolongements de matière précités 15 (fig.2) ainsi que les bossages 13 (fig.6) cachent la partie supérieure des dents 5. Cette disposition est particulièrement avantageuse lorsque des appareils auxiliaires ne nécessitant pas d'être raccordés par les peignes p1,p2 sont placés au milieu d'autres appareils tels des disjoncteurs nécessitant d'être raccordés. Dans ce cas en effet, les dents non utilisées sont placées dans des évidements prévus à cet effet dans les appareils auxiliaires et sont donc plus accessibles que les autres, d'où l'utilité de ces caches.
Ainsi, grâce à l'inclinaison des peignes p1,p2, même les bornes de phase 1 sont accessibles par des gros câbles 14, cette accessibilité étant rendue plus importante encore grâce à la présence des encoches 9, 10. Grâce à cette inclinaison, il est également plus aisé d'accéder au verrou 16 ainsi qu'aux bornes d'un télérupteur
Il est particulièrement avantageux que l'angle β entre le plan R de la face de raccordement 6 et le plan P de la barre 3 soit de 45°, car dans ce cas les barres 3 des deux peignes p1,p2 peuvent être tout à fait identiques, de même que les supports isolants 4. On notera que le support isolant 4 sera réalisé avantageusement par moulage.
On notera également que grâce à la forme des peignes p1,p2 décalée vers l'avant des appareils A, l'accès au verrou haut 16 est encore facilité. On obtient en outre une bonne visibilité des bornes 1,2 lorsque les peignes p1,p2 sont installés, pour raccorder par câble, et pour faire un auto-contrôle visuel lors du raccordement grâce à l'inclinaison des peignes à 45°. En outre, la faible profondeur du peigne autorise le raccordement d'un télérupteur par l'amont.
On notera également que des peignes de grande longueur pourront être réalisés en joignant bout à bout des supports isolants dits de base (comprenant par exemple treize pôles de 18 mm) et en prévoyant une partie de recouvrement pour l'isolation entre les peignes.
Dans cette forme de réalisation décrite, les deux peignes véhiculent respectivement une phase et le neutre mais pourraient aussi véhiculer deux phases différentes ne comportant pas le neutre.
On notera que l'invention s'applique de la même manière à des dispositifs comportant plus de deux peignes.
Le dispositif selon l'invention peut être utilisé pour réaliser l'assemblage et le raccordement d'appareils de types différents tels des disjoncteurs, des appareils différentiels, des auxiliaires, etc.

On notera qu'un tel peigne pourra être alimenté par un connecteur ou par un appareil tête de groupe.

## Revendications

1. Dispositif d'assemblage et de raccordement électrique d'une pluralité d'appareils électriques modulaires montés côte à côte sur un rail de montage, comprenant au moins un peigne de raccordement, chaque peigne comportant une barre conductrice logée dans un support isolant et destinée à véhiculer une phase ou le neutre, ladite barre comportant des dents réparties à intervalles réguliers le long de ladite barre et s'étendant perpendiculairement à la direction longitudinale de ladite barre, lesdites dents étant destinées à être introduites respectivement dans les bornes correspondantes des appareils situées sur la face de raccordement desdits appareils, **caractérisé en ce que** le plan P contenant la barre conductrice (3) est incliné par rapport au plan Q contenant les dents (5) de telle manière que le plan P de la barre (3) forme avec le plan R de la surface de raccordement précitée (6) un angle β compris entre 35° et 55° et **en ce que** le support isolant (4) du ou de chaque peigne pl,p2 comporte des évidements (9,10) situés entre les dents (5) et destinés à permettre le raccordement d'un câble (14) aux bornes (1,2) situées en regard des dents (5) d'un peigne inférieur p1.

2. Dispositif selon la revendication 1, **caractérisé en ce que** l'angle précité β est de l'ordre de 45°.

3. Dispositif selon la revendication 1 ou 2, **caractérisé en ce que** le support isolant précité (4) présente une section transversale sensiblement en forme de U et épouse la forme de la barre (3) de façon à s'étendre dans le plan P de la barre (3).

4. Dispositif selon l'une quelconque des revendications 1 à 3, **caractérisé en ce qu'**il comporte deux peignes p1,p2 respectivement un peigne inférieur p1 et un peigne supérieur p2, lesdits peignes p1,p2 étant destinés à être superposés en position de raccordement et véhiculant respectivement deux phases différentes ou une phase et le neutre.

5. Dispositif selon la revendication 4, **caractérisé en ce qu'**entre deux dents successives (5) sont prévus deux évidements (9,10) en regard prévus respectivement dans la face inférieure (11) et dans la face supérieure (12) du support isolant (4).

6. Dispositif selon l'une quelconque des revendications 4 ou 5, **caractérisé en ce qu'**il comporte des moyens d'indexage (10,13) des deux peignes p1,p2 l'un par rapport à l'autre, lesdits moyens étant prévus en partie sur l'un p1 des peignes p1,p2 et en partie sur l'autre peigne p2.

7. Dispositif, selon la revendication 6, **caractérisé en ce que** ces moyens (10,13) comprennent des bossages (13) prévus sur le support isolant (4) de l'un p1 des peignes p1,p2 coopérant avec des encoches (10) prévues sur le support isolant (4) de l'autre des peignes p1,p2.

8. Dispositif selon la revendication 7, **caractérisé en ce que** chaque peigne p1,p2 comporte des encoches (10) prévues sur la face supérieure (12) du support isolant (4) et des bossages (13) prévus sur la face inférieure (11) du support isolant (4).

9. Dispositif selon la revendication 7 ou 8, **caractérisé en ce que** les bossages (13) sont situés respectivement sous les dents (5) du peigne p1,p2 tandis que les encoches (10) sont situées entre les dents (5) du peigne p1,p2.

## Claims

1. A device for assembly and electrical connection of a plurality of modular electrical apparatuses fitted side by side on a support rail, comprising at least one comb connector, each comb connector comprising a conducting bar housed in an insulating support and designed to convey a phase or neutral, said bar comprising teeth staggered at regular intervals along said bar and extending perpendicularly to the longitudinal direction of said bar, said teeth being designed to be inserted respectively in the corresponding terminals of the apparatuses situated on the connection surface of said apparatuses, **characterized in that** the plane P containing the conducting bar (3) is inclined with respect to the plane Q containing the teeth (5) in such a way that the plane P of the bar (3) forms an angle β comprised between 35° and 55° with the plane R of the above-mentioned connection surface (6) and that the insulating support (4) of the or each comb connector p1, p2 comprises recesses (9, 10) situated between the teeth (5) and designed to enable connection of a cable (14) to the terminals (1, 2) located facing the teeth (5) of a lower comb connector p1.

2. The device according to claim 1, **characterized in that** the above-mentioned angle fi is about 45°.

3. The device according to claim 1 or 2, **characterized in that** the above-mentioned insulating support (4) presents an appreciably U-shaped cross-section and snugly follows the shape of the bar (3) so as to extend in the plane P of the bar (3).

4. The device according to any one of the claims 1 to 3, **characterized in that** it comprises two comb connectors p1, p2, respectively a lower comb connector p1 and an upper comb connector p2, said comb connectors p1, p2 being designed to be superposed in the connection position and respectively conveying two different phases or a phase and neutral.

5. The device according to claim 4, **characterized in that**, between two successive teeth (5), two recesses (9,10) are provided facing one another respectively in the bottom surface (11) and in the top surface (12) of the insulating support (4).

6. The device according to either one of claims 4 or 5, **characterized in that** it comprises means (10, 13) for indexing the two comb connectors p1, p2 with respect to one another, said means being provided partly on one p1 of the comb connectors p1, p2 and partly on the other comb connector p2.

7. The device according to claim 6, **characterized in that** these means (10, 13) comprise bosses (13) provided on the insulating support (4) of one p1 of the comb connectors p1, p2 operating in conjunction with notches (10) provided on the insulating support (4) of the other of the comb connectors p1, p2.

8. The device according to claim 7, **characterized in that** each comb connector p1, p2 comprises notches (10) provided on the top surface (12) of the insulating support (4) and bosses (13) provided on the bottom surface (11) of the insulating support (4).

9. The device according to claim 7 or 8, **characterized in that** the bosses (13) are situated respectively under the teeth (5) of the comb connector p1, p2 whereas the notches (10) are situated between the teeth (5) of the comb connector p1, p2.

## Patentansprüche

1. Vorrichtung zur Verbindung und zum elektrischen Anschluss mehrerer, auf einer Tragschiene aneinandergereihter modularer elektrischer Schaltgeräte, welche Vorrichtung mindestens einen Verbindungskamm umfasst, wobei jeder Verbindungskamm eine in einem Isolierstoffträger angeordnete Leiterschiene zur Führung eines Phasenstroms oder Neutralleiterstroms umfasst und die genannte Schiene in regelmäßigen Abständen angeordnete sowie rechtwinkling zur Längsachse der genannten Schiene ausgerichtete Zähne aufweist, welche Zähne dazu dienen, in die zugehörigen, auf der Anschlussseite der Schaltgeräte angeordneten Klemmen dieser elektrischen Schaltgeräte eingeführt zu werden, **dadurch gekennzeichnet, dass** die Ebene P, in der die Schiene (3) verläuft, schräg zur Ebene Q, in der die Zähne verlaufen, angeordnet ist, derart dass die Ebene P der Schiene (3) mit der Ebene R der genannten Anschlussseite (6) einen Winkel β zwischen 35 und 55° bildet und dass im Isolierstoffträger (4) des bzw. jedes Verbindungskamms p1, p2 zwischen den Zähnen (5) Ausnehmungen (9, 10) ausgebildet sind, die dazu dienen, den Anschluss eines Kabels (14) an die den Zähnen (5) eines unteren Verbindungskamms p1 gegenüber liegenden Klemmen (1, 2) zu ermöglichen.

2. Vorrichtung nach Anspruch 1, **dadurch gekennzeichnet, dass** der genannte Winkel β etwa 45° beträgt.

3. Vorrichtung nach Anspruch 1 oder 2, **dadurch gekennzeichnet, dass** der genannte Isolierstoffträger (4) einen annähernd U-förmigen Querschnitt aufweist und sich an die Form der Schiene (3) anschmiegt, derart dass er in der Ebene P der Schiene (3) verläuft.

4. Vorrichtung nach irgendeinem der Ansprüche 1 bis 3, **dadurch gekennzeichnet, dass** sie zwei Verbindungskämme p1, p2, nämlich einen unteren Verbindungkamm p1 und einen oberen Verbindungskamm p2 umfasst, wobei die genannten Verbindungskämme p1, p2 dazu dienen, in der Anschlussstellung übereinander angeordnet zu werden, und zwei verschiedene Phasenströme bzw. einen Phasenstrom und den Neutralleiterstrom führen.

5. Vorrichtung nach Anspruch 4, **dadurch gekennzeichnet, dass** zwischen zwei aufeinander folgenden Zähnen (5) jeweils zwei, einander gegenüberliegende Ausnehmungen (9, 10) ausgebildet sind, die jeweils in der Unterseite (11) bzw. der Oberseite (12) des Isolierstoffträgers (4) ausgebildet sind.

6. Vorrichtung nach irgendeinem der Anprüche 4 oder 5, **dadurch gekennzeichnet, dass** sie Positioniermittel zur relativen Positionierung der beiden Verbindungskämme p1, p2 aufweisen, welche Mittel teilweise an dem einem Verbindungskamm p1 und teilweise an dem anderen Verbindungsskamm p2 der Verbindungskämme p1, p2 ausgebildet sind.

7. Vorrichtung nach Anspruch 6, **dadurch gekennzeichnet, dass** diese Mittel (10, 13) im Isolierstoffträger (4) eines p1 der Verbindungskämme p1, p2 ausgebildete Auswölbungen (13) aufweisen, die mit im Isolierstoffträger (4) des anderen der Verbindungskämme p1, p2 ausgebildeten Aussparungen (10) zusammenwirken.

8. Vorrichtung nach Anspruch 7, **dadurch gekennzeichnet, dass** jeder Verbindungskamm p1, p2 in der Oberseite (12) des Isolierstoffträgers (4) ausgebildete Aussparungen (10) sowie in der Unterseite (11) des Isolierstoffträgers (4) ausgebildete Auswölbungen (13) umfasst.

9. Vorrichtung nach Anspruch 7 oder 8, **dadurch gekennzeichnet, dass** die Auswölbungen (13) jeweils unterhalb der Zähne (5) des Verbindungskamms p1, p2 und die Aussparungen (10) zwischen den Zähnen (5) des Verbindungskamms p1, p2 ausgebildet sind.
